# EUROPEAN PATENT APPLICATION

(11) **EP 4 190 603 A1**
(43) Date of publication of application: **07.06.2023**
(21) Application number: 21212498.6
(22) Date of filing: 06.12.2021
(51) Int. Cl.: B60G 17/0165, E02F 1/00, F16F 1/00, G07C 5/00

(54) **METHOD AND SYSTEM FOR MONITORING VIBRATIONS**

(71) Applicant: VOLVO TRUCK CORPORATION, 405 08 Göteborg (SE)
(72) Inventor: MORAN, Santiago, 80740-590 Curitiba (BR); SIQUEIRA, Ney, 82010-340 Curitiba (BR)
(74) Representative: Zacco Sweden AB

(57) **Abstract**

A method for monitoring vibrations incurred on a driver of a vehicle and setting an alert flag when the vibrations exceed a predefined level, where the method comprises the steps of: continuously measuring vibration values corresponding to vibrations acting on the driver; determining an accumulated vibration level based on the measured vibration values; comparing the accumulated vibration level to a predefined vibration threshold; and setting an alert flag if the accumulated vibration level exceeds the predefined vibration threshold.

## Description

### TECHNICAL FIELD

The present invention relates to a method and a system for monitoring vibrations imposed on a driver in order to determine a daily vibration exposure level. The method may be used to determine if the exposed level of a driver is within legal demands.

### BACKGROUND ART

Heavy vehicles, especially the ones used at constructions sites, are often subjected to an uneven ground that will cause the vehicle to vibrate. Modern vehicles are provided with different means to minimize the impact of the vibrations on the vehicle, on the load of the vehicle and on the driver. The wheel axles are provided with suspension and shock absorbers, either air suspension or leaf springs, that will try to isolate the chassis from the ground. Further, the driver cabin may be suspended on the chassis with an additional air suspension that will reduce the road impact on the driver cabin. And finally, the driver seat may be air suspended to further reduce the road impact on the driver.

The vibrations that act on the vehicle can have different intensity and different time dependency. Some vibrations have a relatively high frequency but with a lower energy, and some vibrations have a high energy but a lower frequency. A suspension system of the vehicle is tuned for a set frequency interval and load of the vehicle, which means that vibrations in some frequency intervals and load intervals will be more supressed than other. The suspension of the driver seat is e.g. possible to change in dependency of the weight of the driver, but not depending on the type of vibrations.

Since some vibrations will have a higher impact on the vehicle and thus on the driver, it is difficult to predict the amount of vibrations that the driver is subjected to. Newer legislations specifies the maximal amount of vibrations that a driver may be subjected to. This regards both vibrations on the body and vibrations on the hands and arms of the driver. ISO 2631 regards "whole body vibration" and ISO 5349 regards "hand and arm vibration". These standards stipulates a maximal vibration level that a driver is allowed to experience during a daily work shift.

There is thus a need for a method for monitoring vibrations incurred on a driver of a vehicle.

### DISCLOSURE OF INVENTION

An object of the invention is therefore to provide a method for monitoring vibrations incurred on a driver of a vehicle. A further object of the invention is to provide a system for monitoring vibrations incurred on a driver of a vehicle. A further object of the invention is to provide a vehicle comprising such a system. An object is also to provide a computer program and a computer program product adapted to perform the steps of the method.

The solution to the problem according to the invention is described in the characterizing part of claim 1 regarding the method, in claim 10 regarding the system and in claim 13 regarding the vehicle. The other claims contain advantageous further developments of the inventive method. Claims for a computer program and a computer program product are also enclosed.

In a method for monitoring vibrations incurred on a driver of a vehicle and setting an alert flag when the vibrations exceed a predefined level, the steps of; continuously measuring vibration values corresponding to vibrations acting on the driver; determining an accumulated vibration level based on the measured vibration values; comparing the accumulated vibration level to a predefined vibration threshold; and setting an alert flag if the accumulated vibration level exceeds the predefined vibration threshold are comprised.

By this first embodiment of the method, the method is able to determine if the accumulated vibration level incurred on a driver exceeds the predefined vibration threshold. If the accumulated vibration level exceeds the predefined vibration threshold, an alert message may be given to the driver or an alert message may be given to the employer such that the health of the driver may be monitored remotely. The determined vibration level may also be stored in a remote data storage for later reference.

The vibrations incurred on the driver are measured continuously with one or more sensors adapted to measure vibrations. An accelerometer is well suited to measure vibrations, but it is also possible to use e.g. displacements sensors to detect at least lower frequency vibrations. In a preferred example, two accelerometers are used to measure the vibrations. One accelerometer is positioned on the driver seat, at the seat, and one accelerometer is positioned on the steering wheel column. By positioning the vibration sensors in this way, the actual vibrations incurred on the driver can be measured in an accurate manner.

It is also possible to position the vibration sensors at other positions of the vehicle, and to correlate the vibration measurements to the position of the driver. This can be done e.g. in a test rig where different vibration values are correlated to the vibrations of the driver seat and the steering wheel column in e.g. a table. One position for a vibration sensor is the floor of the cabin. It would also be possible to use a vibration sensor positioned e.g. on the gearbox, or to use the displacement sensors of the air suspension.

The relevant vibrations for the full body of the driver are relatively low frequency vibrations, having a frequency in the range between e.g. 1 to 100 Hz. The vibrations for the hands and arms of the driver have a higher frequency, e.g. in the range between 10 to 1000 Hz. In a vehicle, the vibrations incurred on the hands of a driver will still be relatively low, since the vibrations from the ground are filtered through the tires, the wheel suspension and the steering wheel components. The vibrations from the steering wheel cannot be compared to vibrations from e.g. a rotating hand tool such as an angle grinder.

The vibration values are measured continuously and are stored in a memory, where an accumulated vibration level is stored and is compared to a predefined vibration threshold. When the predefined vibration threshold is exceeded, an alert flag is set in the system. The alert flag can be used to give a message to the driver that the predefined vibration threshold is exceeded, such that the driver can reduce the vibrations by e.g. driving slower or to stop working completely. It is also possible to send a message to a remote location, e.g. to the fleet management.

The accumulated vibration level can be determined in different ways. The accumulated vibration level may e.g. be divided in different frequency ranges, where the energy of each frequency range is determined individually. When the energy in one frequency range is exceeded, the alert flag may be set. It is also possible to correlate the energy in each frequency range and to calculate a mean value for all frequency ranges, and to set the alert flag when the mean value exceeds the predefined vibration threshold.

In the inventive system adapted to determine if a driver has been exposed to a predefined vibration level, where the system is provided with at least one vibration sensor arranged to continuously measure vibration values acting on the driver, and an electronic control unit arranged to determine an accumulated vibration level based on the measured vibration values, the object of the invention is achieved in that the electronic control unit is further arranged to compare the accumulated vibration level to a predefined vibration threshold, and to output an alert signal if the accumulated vibration level exceeds the predefined vibration threshold.

With the inventive system, it is possible to determine if a driver has been exposed to a predefined vibration level. This can be used to prevent a driver from excessive vibration levels over a longer time period. Normally, a short high vibration level is not serious, but high vibration levels over a longer time may be hurtful. By determining the accumulated vibration level for a driver, the health of the driver can be monitored.

### BRIEF DESCRIPTION OF DRAWINGS

The invention will be described in greater detail in the following, with reference to the attached drawings, in which
- Fig. 1: shows a schematic example of a vehicle provided with a system to monitor vibrations,
- Fig. 2: shows another schematic example of a vehicle provided with a system to monitor vibrations, and
- Fig. 3: shows a schematic flow chart of the inventive method.

### MODES FOR CARRYING OUT THE INVENTION

The embodiments of the invention with further developments described in the following are to be regarded only as examples and are in no way to limit the scope of the protection provided by the patent claims.

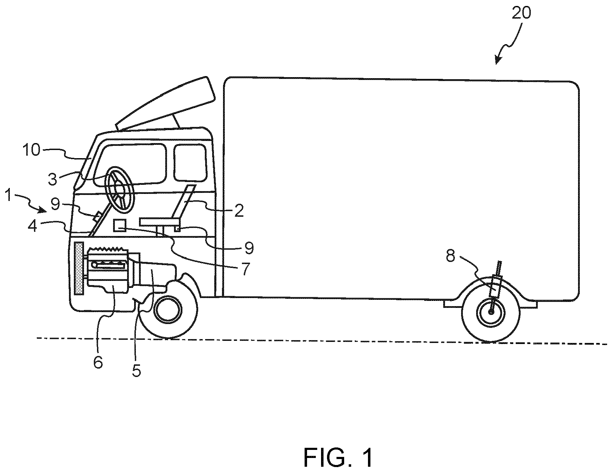

Fig. 1 shows a schematic vehicle 20 provided with an inventive system 1 for monitoring vibration levels incurred on a driver. The system comprises an electronic control unit (ECU) 7 arranged to measure vibrations and to process the measured vibration values in order to determine an accumulated vibration level. The system is in the shown example provided with two vibrations sensors 9, here accelerometers, where one accelerometer is arranged at the driver seat 2 and one accelerometer 9 is arranged at the steering wheel column 4 of the steering wheel 3.

The accelerometer arranged at the driver seat is preferably arranged directly at the seat, downstream of the suspension of the seat, such that it will measure the vibrations incurred on the driver. This accelerometer is arranged to monitor the full body vibrations incurred on the driver. The vibration sensor or the ECU may be provided with a frequency filter, e.g. a bandwidth filter that filters out frequencies that are not interesting for the selected vibration profile. For the full body vibration monitoring, relatively low frequency vibrations will be measured, having a frequency in the range between e.g. 1 to 100 Hz.

The accelerometer arranged at the steering wheel column may be arranged directly on the steering wheel column 4 or may also be arranged on the steering wheel 3, and is arranged to monitor the vibrations incurred on the hands and arms of the driver. The vibration sensor or the ECU may be provided with a frequency filter, e.g. a bandwidth filter that filters out frequencies that are not interesting for the selected vibration profile. The monitoring of hand and arm vibrations will measure higher frequencies, e.g. in the range between 10 to 1000 Hz.

The vibrations are measured continuously, and the ECU will determine an accumulated vibration level for the actual driver. The accumulated vibration level is determined over a suitable time period, e.g. for a work shift of a driver. When the work shift starts, the accumulated vibration level is then set to zero, and the measurements starts. The ECU will compare the accumulated vibration level with a predefined vibration threshold, and will set an alert flag if the accumulated vibration level exceeds the predefined vibration threshold. The predefined vibration threshold is a value that is set by e.g. a fleet owner in dependency of a legislative standard, such that the accumulated vibration level of a driver will follow the standard.

The measured vibration values may be stored and assessed in different ways. The vibration signal from a vibration sensor may be stored as it is, or may be divided in different frequency intervals, where each frequency interval is stored and assessed individually. The values of the different frequency intervals may then be added to each other, with or without a weigh factor for the different frequencies. The values from different vibration sensors will also be added to each other, such that a total accumulated vibration level is obtained.

The predefined vibration threshold may e.g. be divided in different frequency ranges, where each frequency range has a specific threshold. In this case, the accumulated vibration level will also comprise different values for each frequency range. When the energy in one frequency range is exceeded, the alert flag may be set. It is also possible to correlate the energy in each frequency range and to calculate a mean value for all frequency ranges, and to set the alert flag when the mean value exceeds the predefined vibration threshold.

The alert flag may be used in different ways. In one example, a message is given to the driver when the alert flag is set. The message may be a warning lamp or warning sign indicating that the predefined vibration threshold is exceeded. When the driver receives the message, he may e.g. reduce the speed of the vehicle, thereby reducing vibrations, such that the work shift may be completed. He may also have to stop working immediately. It is also possible to display the accumulated vibration level on a display of the vehicle, such that the driver can see how close he is to the predefined vibration threshold. The displayed value may e.g. be a percentage of the predefined vibration threshold.

It is also possible to only give a message to a remote unit, such as a fleet management, when the alert flag is set. In this case, the fleet management can monitor the vibrations incurred on each driver, and give a message to the driver depending on the actual accumulated vibration level. If the predefined vibration threshold is only exceeded with a small amount, and the work shift is almost done, the driver may continue to work.

It is also possible to give a message to the driver when the accumulated vibration level is e.g. 95% of the predefined vibration threshold. In this case, the driver will know that there is a risk that the predefined vibration threshold will be exceeded if measures to reduce the vibrations is not made, e.g. to reduce the speed of the vehicle.

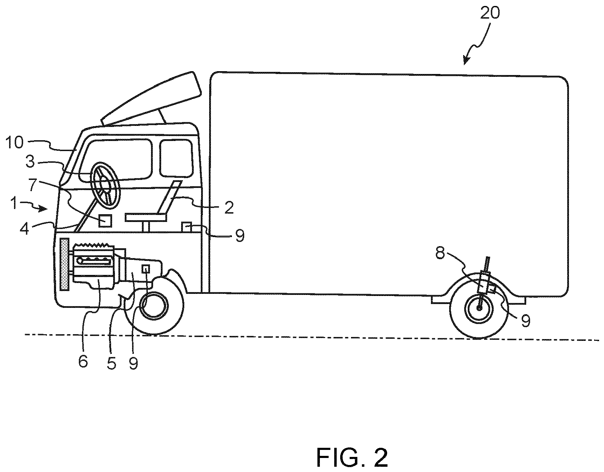

Fig. 2 shows another example of the system 1 for monitoring vibration levels incurred on a driver. The system comprises an electronic control unit (ECU) 7 arranged to measure vibrations and to process the measured vibration values in order to determine an accumulated vibration level. The system is in the shown example provided with vibrations sensors 9 arranged at other positions of the vehicle. In the shown example, one vibration sensor is arranged on the floor of the cabin 10. Another vibration sensor 9 is arranged on the gearbox 5 of the vehicle. The vibration sensors may e.g. be accelerometers. Another vibration sensor 9 is arranged at the air suspension 8 of the vehicle. Here, the vibration sensors may be the displacement sensor of the air suspension. The system may comprise one or more of these sensors, depending e.g. on the availability of the sensors or the required accuracy of the measurements.

In one example, the vehicle is provided with an existing accelerometer arranged at the gearbox, and an air suspension. In this case, the signal from the gearbox accelerometer and the signal from the displacement sensor of the air suspension is used by the ECU to measure the vibrations. In this case, the measured vibration signals must be correlated such that they represent the vibrations incurred on the driver. The vibrations of the gearbox and the vibrations of the air suspension will mostly be higher and will have a different frequency spectrum than the vibration signals of the driver seat or the steering wheel.

The correlation factor for the different vibration sensors may e.g. be determined in a test bench or at a test track, where the vibrations measured by the gearbox accelerometer and the vibrations measured by the displacement sensor of the air suspension are compared to vibrations measured by an accelerometer arranged at the driver seat and an accelerometer arranged at the steering wheel. The correlation factor or factors are e.g. stored in a memory, and the ECU will use these correlation factors to determine the accumulated vibration level.

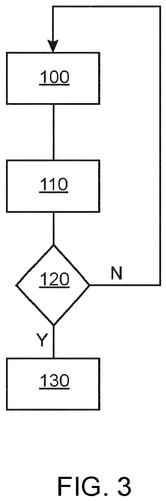

Fig. 3 shows a schematic flow chart of one example of the method for monitoring vibrations incurred on a driver of a vehicle and setting an alert flag when the vibrations exceed a predefined level.

In step 100, a vibration value corresponding to vibrations acting on the driver is measured. The measurements are performed continuously with a predefined sample rate. The vibrations are measured with one or more vibration sensors, e.g. accelerometers. In one example, the accelerometers are positioned at the driver seat and at the steering wheel.

In step 110, an accumulated vibration level based on the measured vibration values is determined.

In step 120, the accumulated vibration level is compared to a predefined vibration threshold.

In step 130, an alert flag is set if the accumulated vibration level exceeds the predefined vibration threshold. The alert flag may be used to give the driver a message that the predefined vibration threshold is exceeded.

The invention is not to be regarded as being limited to the embodiments described above, a number of additional variants and modifications being possible within the scope of the subsequent patent claims.

### REFERENCE SIGNS

- 1:: System
- 2:: Driver seat
- 3:: Steering wheel
- 4:: Steering wheel column
- 5:: Gearbox
- 6:: Engine
- 7:: Electronic control unit
- 8:: Air suspension
- 9:: Accelerometer
- 10:: Cabin
- 20:: Vehicle

## Claims

1. Method for monitoring vibrations incurred on a driver of a vehicle and setting an alert flag when the vibrations exceed a predefined level, comprising the following steps:
- continuously measuring vibration values corresponding to vibrations acting on the driver,
- determining an accumulated vibration level based on the measured vibration values,
- comparing the accumulated vibration level to a predefined vibration threshold,
- setting an alert flag if the accumulated vibration level exceeds the predefined vibration threshold.

2. Method according to claim 1, wherein the vibration values are measured with two accelerometer sensors arranged at two different positions of the vehicle.

3. Method according to claim 1 or 2, wherein the vibration values are measured with an accelerometer arranged on a driver seat and an accelerometer arranged on a steering column.

4. Method according to claim 1, wherein the vibration values are measured with a sensor attached to the vehicle, where the measured vibration values are correlated to correspond to vibrations acting on the driver.

5. Method according to claim 4, wherein the sensor is an accelerometer arranged on a gearbox of the vehicle.

6. Method according to claim 4, wherein the sensor is a displacement sensor arranged on an air suspension of the vehicle.

7. Method according to any of claims 1 to 6, wherein the method further comprises the step of: giving an alert signal to the driver when the alert flag is set.

8. Method according to any of claims 1 to 7, wherein the method further comprises the step of: displaying the accumulated vibration level on a display.

9. Method according to any of claims 1 to 8, wherein the method further comprises the step of: storing the accumulated vibration level in a remote storage unit.

10. A system (1) adapted to determine if a driver has been exposed to a predefined vibration level, where the system (1) is provided with at least one vibration sensor (9) arranged to continuously measure vibration values acting on the driver, and an electronic control unit (7) arranged to determine an accumulated vibration level based on the measured vibration values, **characterized in that** the electronic control unit (7) is further arranged to compare the accumulated vibration level to a predefined vibration threshold, and to output an alert signal if the accumulated vibration level exceeds the predefined vibration threshold.

11. System according to claim 10, wherein the system is arranged to give the driver an alert message when the alert signal is outputted.

12. System according to claim 10 or 11, wherein the system comprises two accelerometers, where one accelerometer (9) is arranged on the driver seat (2) and one accelerometer (9) is arranged on the steering column (4).

13. Vehicle (20), comprising a system according to any of claims 10 to 12.

14. A computer program comprising program code means for performing all the steps of claims 1 - 9 when said program is run on a computer.

15. A computer program product comprising program code means stored on a computer readable medium for performing all the steps of claims 1 - 9 when said program product is run on a computer.
